Europäisches Patentamt

European Patent Office

Office européen des brevets

(19)

(11) Publication number: **0 292 115**
**A2**

# EUROPEAN PATENT APPLICATION

(12)

(21) Application number: **88303512.3**

(22) Date of filing: **19.04.88**

(51) Int. Cl.⁴: **G21C 19/30 , G21D 1/02**

(30) Priority: **07.05.87 GB 8710793**

(43) Date of publication of application:
**23.11.88 Bulletin 88/47**

(84) Designated Contracting States:
**DE FR GB**

(71) Applicant: **British Nuclear Fuels PLC**

**Risley Warrington Cheshire, WA3 6AS(GB)**

(72) Inventor: **Smith, Harry**
**24 Windermere Road Handforth**
**Wilmslow Cheshire(GB)**

(74) Representative: **Owen, Geoffrey John et al**
**Patents Branch United Kingdom Atomic**
**Energy Authority 11 Charles II Street**
**London SW1Y 4QP(GB)**

(54) **A valve and filter assembly.**

(57) For use on nuclear active plant a valve and filter assembly in which the filter assembly comprises a housing containing a filter element. The housing is releasably secured to the valve such that the valve and the filter element can be removed and replaced as a unit in a nuclear active plant.

EP 0 292 115 A2

# A valve and filter assembly

The present invention concerns a valve and filter assembly in particular an assembly for nuclear active plants.

A valve can take the form of a cartridge type valve body having serviceable sleeves whereby the valve can be periodically removed and refurbished by changing the sleeves on the valve body. In nuclear active plants it is necessary to restrict to a minimum the points of access to the plant on the grounds of safety. The Plants incorporate filters to trap and retain solids in the flow through the plants and it is necessary to replace such filters periodically.

According to the present invention there is provided a valve and filter assembly for use in nuclear active plants in which a valve body accommodates a valve which carries a filter assembly, the filter assembly comprising a housing and a filter element characterised in that the filter housing is releasably secured to the valve whereby the valve and the filter element can be removed and replaced as a unit in a nuclear active plant.

The unit is flasked into and out of its position of use and the existing flasks can accommodate the increased length of the valve plus the filter.

Am embodiment of the invention will be described, by way of example, with reference to the accompanying diagrammatic drawing.

A valve body 1, shown in chain dot outline, accommodates a cartridge valve (not shown) which carries a filter assembly 2. The assembly 2 comprises a filter housing 3 and a filter element 4. Conveniently, the filter element 4 is a pleated, hollow cylindrical stainless steel mesh closed at its lower end 5 and in communication with the valve at its opposite end.

The lower end of the valve is formed with a support ring 6 which is secured in place by bolts 7. The ring 6 provides a seal face and carries the filter housing 3. A sealing ring 8, for example a soft neoprene ring, is provided at the end of the filter housing 3 to engage the support ring 6. The filter housing 3 can be releasably secured to the support ring 6 by means of ball detents 9, conveniently six in number, extending at intervals around the housing 3. Alternatively a bayonet type fitting can be employed to secure the filter housing 3 to the support ring 6. In addition a pair of locking screws 10 are provided to secure the housing 3 to the support ring 6. The lower end of the housing 3 is provided with a removal ring 11 which comprises a pair of diametral members 12 mutually at right angles and secured at their outer ends to upper and lower rings 13 at the end of the filter housing 3.

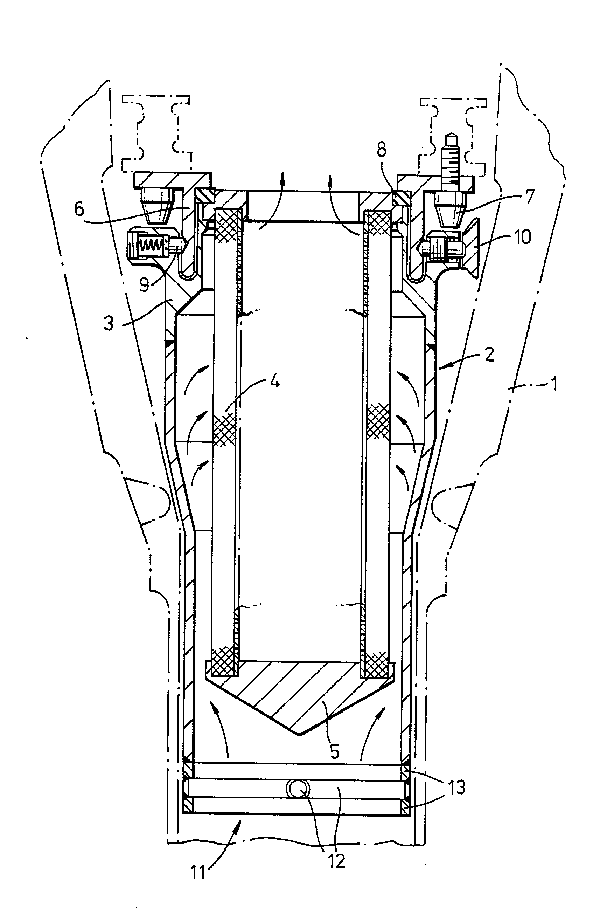

In use, liquid in a pipeline flows through the filter element 4 and through the valve as denoted by the arrows in the drawing. When it is required to replace the filter element, service the valve or both, the unit is removed from the valve body and transferred in a flask to a decontamination facility. At such a facility the filter assembly 2 is separated from the valve cartridge. The locking screws 10 are released and the filter assembly is placed in a disposal container. The removal ring 11 is then engaged to pull the filter housing 3 from the used filter element 4. The used filter element 4 remains in the disposal container and the filter housing is removed to receive a fresh filter element. The operations can be performed remotely by means of manipulators.

The filter housing 3 with the fresh filter element is snapped on to the support ring 6 of the valve and secured by the locking screws 10. The new unit is flasked into its operative position in the valve body 1.

## Claims

1. A valve and filter assembly for use in nuclear active plants in which a valve body accommodates a valve which carries a filter assembly, the filter assembly comprising a housing and a filter element characterised in that the filter housing (3) is releasably secured to the valve whereby the valve and the filter element (4) can be removed and replaced as a unit in a nuclear active plant.

2. An assembly according to claim 1 in which the housing is releasably secured to the valve by ball detents (9) and locking screws (10).

3. An assembly according to claim 1 including a support ring (6) secured to the valve to provide a seal face for the filter element (4).

4. An assembly according to claim 3 including removal means (11) at end of the filter housing remote from the support ring engageable to pull the housing (3) away from the filter element (4).